# EUROPÄISCHE PATENTSCHRIFT

(11) **EP 0 697 557 B1**
(45) Veröffentlichungstag und Bekanntmachung des Hinweises auf die Patenterteilung: **16.08.2001**
(21) Anmeldenummer: 95106609.1
(22) Anmeldetag: 03.05.1995
(51) Int. Cl.: F16L 55/162

(54) **Verfahren zur Beschichtung und Schnellabdichtung von undichten Rohrleitungen, insbesondere Trinkwasserleitungen**
Method for lining and quickly sealing pipes, in particular for drinking water pipes
Procédé pour le revêtement et l'étanchéité rapide de tuyaux, notamment pour tuyaux transportant de l'eau potable

(30) Priorität: 31.05.1994 DE 4418989
(43) Veröffentlichungstag der Anmeldung: 21.02.1996
(73) Patentinhaber: Kost, Reinhard, D-55257 Budenheim (DE)
(72) Erfinder: Kost, Reinhard, D-55257 Budenheim (DE)
(74) Vertreter: Holtfoth, Hans-Jürgen

(56) Entgegenhaltungen:
- EP-A- 0 631 086
- DE-A- 3 844 485
- FR-A- 2 527 742
- FR-A- 2 627 255
- US-A- 3 716 384

## Beschreibung

Die Erfindung betrifft ein Verfahren zur Beschichtung und Schnellabdichtung von undichten Rohrleitungen, insbesondere Trinkwasserleitungen.

Wenn an irgendeiner Stelle in einer unter Putz verlegten Trinkwasserleitung ein Leck auftritt, so muß die Trinkwasserleitung im Umgebungsbereich der Leckstelle vom abdeckenden Putz freigelegt werden, damit an dieser Stelle ein leckfreies, neues Rohrstück eingesetzt werden kann. Diese Arbeit ist langwierig, aufwendig und mit hohen Kosten verbunden.

Aus der Offenlegungsschrift DE-A-3844485 ist ein Verfahren zur Leckabdichtung in Rohrleitungen bekannt, bei dem durch einen undichten, entleerten Rohrleitungsabschnitt eine Selbstdichterflüssigkeit über eine längere Verfestigungslaufzeit mittels einer Umwälzpumpe umgepumpt wird.
Es ist hierbei nachteilig, dass keine Möglichkeit zur Fixierung einer stabilen mineralischen Innenbeschichtung zur Verbesserung der Leckabdichtung besteht.

Der Erfindung liegt die Aufgabe zugrunde, ein Verfahren vorzuschlagen, das eine stabile und dauerhafte Leckabdichtung und -verhinderung innerhalb weniger Stunden ermöglicht, ohne daß die betreffende Trinkwasserleitung teilweise oder ganz freigelegt und ersetzt werden muß, wobei nur von einer Bedienungsperson transportier- und handhabbares Kleingerät zum Einsatz kommt. Dabei soll die Möglichkeit bestehen, je nach Anwendung eine gleichzeitige mineralische Innenbeschichtung durchzuführen.

Gelöst wird diese Aufgabe nach der Erfindung durch die im Anspruch 1 angegebenen Verfahrensmerkmale.

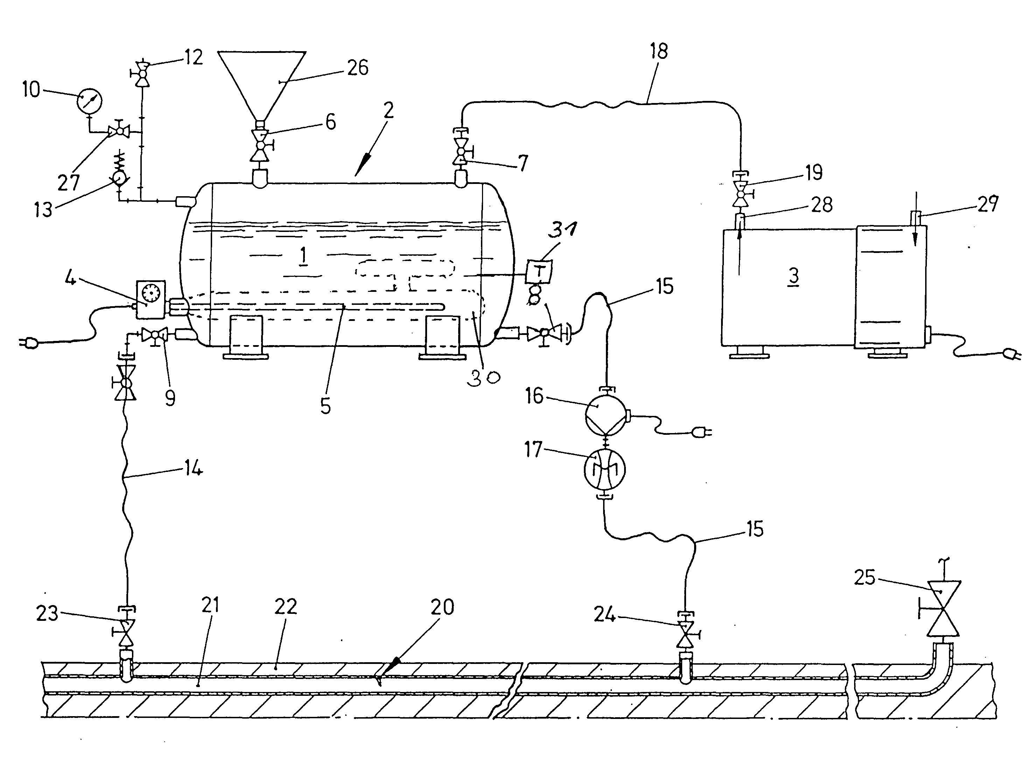

Nachfolgend wird anhand der Zeichnung eine Ausführungsform der Erfindung näher dargestellt.

Es wird ein mit einer Abdichtflüssigkeit 1 angefüllter transportabler Vorratstank 2 verwendet, in dem sich ein Wärmetauscher 30 befindet, in den ein eingebauter Elektroheizstab 5 hineinragt, der mit einem Thermostat 4 mit einem Regelbereich von 20-300 Grad C ausgerüstet ist. Dieser Elektroheizstab 5 gestattet die Aufheizung der Abdichtflüssigkeit 1 auf eine konstant zu haltende Temperatur.

Ein zweiter mit seinem Fühler in den Vorratstank 2 hineinragender Thermostat 31 hat einen Regelbereich von 35-110 Grad C.

Der Vorratstank 2 ist ferner mit vier Absperrorganen 6,7,8 und 9 sowie einem Manometer 10 (Meßbereich 0-4 Bar) und zwei Absperrorganen 12 und 27 ausgerüstet.
Ebenso ist ein Sicherheitsventil vorgesehen.

Die Befüllung des Vorratstanks 2 erfolgt über den Einlauftrichter 26.

Wenn ein Leck 20 in der unter der Putzschicht 22 verlegten Trinkwasserleitung 21 festgestellt wird, dann wird zunächst das Absperrorgan 25 für die Trinkwasserzufuhr geschlossen und die Rohrleitung beiderseits der Leckstelle 20 zwischen den Absperrorganen 23 und 24 entleert.

Dann werden die beiden Verbindungsschläuche 14 und 15 des Vorratstanks 2 an die besagten Absperrorgane 23 und 24 angeschlossen.

In dem einen Verbindungsschlauch 15 ist noch eine Umwälzpumpe 16 mit einem Durchflußmesser 17 eingeschaltet.

Der Vorratstank 2 steht über den Verbindungsschlauch 18 mit Absperrorgan 19 mit einem Druckluftkompressor 3 in Verbindung, der die Lufteintrittsöffnung 29 und die Druckluftaustrittsöffnung 28 besitzt.

Der transportable Druckluftkompressor kann somit nach Anschluß seines Verbindungsschlauches 18 an das Absperrorgan 25 der Trinkwasserleitung das Freiblasen der abgedichteten Leitung bewirken.

Die Abdichtflüssigkeit wird etwa 2 bis 24 Stunden an der Leckstelle vorbeigeleitet.

Nach Abtrennen der Verbindungsschläuche 14 und 15 und Verschließen der Absperrorgane 23 und 24 sowie nach öffnen des Absperrorgans 25 der Trinkwasserzuleitung steht das abgedichtete Trinkwasserleitungsrohr 21 wieder zur Verfügung.

## Patentansprüche

1. Verfahren zur Beschichtung und Schnellabdichtung von undichten Rohrleitungen insbesondere Trinkwasserleitungen, durch Außerbetriebnahme der Trinkwasserzufuhr, Entleeren der zu reparierenden Rohrleitung, beiderseitiges Anschließen der zu reparierenden Rohrleitung in Form eines geschlossenen Kreislaufes an einen mit einem Druckluftkompressor in Verbindung stehenden beheizbaren Vorratstank mit Abdichtflüssigkeit, Befüllen der zu reparierenden Rohrleitung mit der temperierten Abdichtflüssigkeit, Umpumpen der Abdichtflüssigkeit unter gleichbleibenden Druckbedingungen bis zur Verfestigung des Abdichtmittels und Entleeren der Abdichtflüssigkeit aus der reparierten Rohrleitung,
gekennzeichnet durch
- die Verwendung eines Abdichtmittels in Form einer auf ein Liter Natrium bzw. Kaliumsilikat bezogenen Mischung von 100 - 300 g Quarzgut (keramischer Grundstoff), 30 - 70 g Aluminiumphosphat (langsamer Härter), 50 - 200 g Aluminumphosphat (toter Härter), 1 - 10 g Dispergiermittel (Hafthilfe) und 10 - 500 g Wasser (Verflüssiger),
- Hindurchleiten eines CO₂-Gasstromes durch die reparierte Rohrleitung zum Stabilisieren der mineralischen Schicht an der inneren Rohrwand,
- Aktivierung des toten Härters durch Befüllen der beschichteten Rohrleitung mit Heißwasser
und
- Wiederinbetriebnahne der Rohrleitung.

2. Verfahren nach Anspruch 1,
dadurch gekennzeichnet, daß die Merkmale d)-g) mindestens einmal wiederholt werden.

3. Verfahren nach Anspruch 1 oder 2
gekennzeichent durch
- Verwendung eines von Hand transportierbaren mit Abdichtflüssigkeit (1) gefüllten Vorratstanks (2),
- mit einem an eine durch einen Thermostaten (4) mit einem Regelbereich von 20-300 Grad C geregelte Wärmequelle -beispielsweise einen Elektroheizstab (5) - angeschlossenen internen Wärmetauscher (30),
- mit einem zweiten,mit seinem Fühler in die Abdichtflüssigkeit (1) hineinragenden Thermostaten (31) mit einem Regelbereich von 35-110 Grad C,
- mit sechs Absperrorganen (6,7,8,9,12 und 27), einem Manometer(10) mit einem Meßbereich von 0-4 Bar und einem Sicherheitsventil (13), und
- mit zwei Verbindungsschläuchen (14,15), wobei in einem von beiden eine Umwälzpumpe (16) mit Durchflußmesser (17) eingeschaltet ist sowie
- Verwendung eines von Hand transportierbaren Druckluftkompressors (3) mit Lufteintrittsöffnung (29) und Druckluftaustrittsöffnung (28) und einem Verbindungsschlauch (18), der mit einem Absperrorgan (19) ausgerüstet ist.

4. Verfahren nach Anspruch 3,
gekennzeichnet durch Verwendung eines externen Wärmetauschers mit Anschluß an eine eigene oder fremde Wärmequelle und mit oder ohne thermostatische Regelung.

5. Verfahren nach Anspruch 3 oder 4,
gekennzeichnet durch die Verwendung einer selbstansaugenden Druckpumpe, die mit einem Bypass oder einem Dreiwegeventil, einem Manometer und einem Absperrorgan ausgestattet ist, anstelle des Druckluftkompressors.

6. Verfahren nach Anspruch 1,
gekennzeichnet durch
die Verwendung von gleichen Mengen Zinkoxid anstelle von Aluminiumphosphat.

## Claims

1. Process to coat and quick-seal leaking pipes, particularly drinking water pipes, by shutting off the drinking water supply, emptying the leaking pipe, connecting the leaking pipe on both sides - in the form of a closed cycle - to a heatable storage tank filled with sealing liquid and linked to an air compressor, filling the leaking pipe with tempered sealing liquid, pumping sealing liquid through the pipe under constant pressure conditions until the sealing agent has compacted, then emptying the sealing liquid from the repaired pipe,
featuring
- use of a sealing agent consisting of a mix of 100 - 300 g of vitreous fused silica (basic ceramic material), 30 - 70 g of aluminium phosphate (slow hardener), 50 - 200 g of aluminium phosphate (dead hardener), 1-10 g of dispersing agent (adhesive aid) and 10 - 500 g water (liquefier), this mix being related to a litre of sodium or potassium silicate,
- running of a CO₂ gas stream through the repaired pipe to stabilise the mineral layer on the inside pipe wall,
- activation of the dead hardener by filling the coated pipe with hot water
and
- taking the pipe back into operation.

2. Process under Claim 1, with the special feature that items d) - g) are repeated at least once

3. Process under Claim 1 or 2, with the special feature of
- use of a storage tank (2) filled with sealing liquid (1) and transportable by hand,
- an internal heat exchanger (30) connected to a heat source- such as an electrical heating element (5) - by a thermostat (4) with a control range from 20 - 300 degrees C,
- a second thermostat (31) with a detector projecting into the sealing liquid (1) with a control range of 35-110 degrees C,
- six shut-off devices (6, 7, 8, 9, 12 and 27), a manometer (10) with a measuring range of 0-4 bar and a safety valve (13),
and
- two connecting pipes (14, 15), with a circulation pump (16) with a flow meter (17) being inserted in one of the two,
and
- use of an air compressor (3) transportable by hand with an air inlet opening (29) and a compressed air outlet opening (28) and a connecting pipe (18) equipped with a shut-off device (19).

4. Process under Claim 3,
with the special feature of
use of an external heat exchanger with a connection to its own or an outside heat source and with or without thermostatic control.

5. Process under Claim 3 or 4,
with the special feature of
use of a self-priming pressure pump equipped with a by-pass or a three-way valve, a manometer and a shut-off device instead of the air compressor.

6. Process under Claim 1,
with the special feature of
use of the same quantities of zinc oxide instead of aluminium phosphate.

## Revendications

1. Procédé de revêtement et d'étanchement rapide de tuyaux présentant des fuites, notamment des tuyaux d'eau potable, moyennant l'arrêt de l'amenée d'eau potable, le vidange du tuyau devant être réparé, le raccord des deux extrémités du tuyau devant être réparé à un réservoir de réserve chauffable rempli d'un liquide d'étanchement et raccordé à un compresseur d'air de façon à former un circuit fermé, le remplissage du tuyau devant être réparé avec le liquide d'étanchement préchauffé, la circulation du liquide d'étanchement sous des conditions de pression constantes jusqu'à solidification de l'agent d'étanchement et l'écoulement du liquide d'étanchement du tuyau réparé,
caractérisé par
- l'utilisation d'un agent d'étanchement constitué par un mélange de 100 - 300 g silice vitreuse (produit de base céramique), 30 - 70 g de phosphate d'aluminium (durcisseur lent), 50 - 200 g de phosphate d'aluminium (durcisseur inactif), 1 - 10 g d'agent dispersant (agent d'accrochage) et 10 - 500 g d'eau (liquéfiant) dans un litre de sodium ou silicate de potassium respectivement,
- le passage d'un flux de CO₂ gazeux par le tuyau réparé pour stabiliser la couche minérale sur la paroi intérieure du tuyau,
- l'activation du durcisseur inactif en remplilssant le tuyau revêtu avec de l'eau chaude
et
- remise en service du tuyau.

2. Procédé selon la revendication 1,
caractérisé en ce que les caractéristiques d) - g) sont répétées au moins une fois.

3. Procédé seloln selon l'une quelconque des revendications 1 ou 2
caractérisé par
- l'utilisation d'un réservoir de réserve (2) rempli du liquide d'étanchement (1 ) pouvant être porté à la main,
- avec un échangeur de chaleur (30) incorporé raccordé à une source de chaleur - par exemple un thermoplongeur (5) - réglée par un thermostat (4) avec une plage de réglage de 20-300 degrés Celsius,
- avec un second thermostat (31) dont le palpeur se prolonge à l'intérieur du liquide d'étanchement (1) et ayant une plage de réglage de 35-110 degrés Celsius,
- avec six organes d'arrêt (6,7,8,9,12 et 27), un manomètre (10) avec une plage de mesure de 0-4 bars et une vanne de sécurité (13), et
- avec deux tuyaux de raccord flexibles (14, 15), une pompe de circulation (16) avec débitmètre (17) étant intercalée dans un des deux tuyaux flexibles, ainsi que
- l'utilisation d'un compresseur d'air (3) pouvant être porté à la main, avec ouverture d'entrée d'air (29) et ouverture de sortie d'air comprimé (28) et un tuyau de raccord flexible (18) équipé d'un organe d'arrêt (19).

4. Procédé selon la revendication 3,
caractérisé par
l'utilisation d'un échangeur de chaleur indépendant avec raccord à une source de chaleur incorporée ou indépendante avec ou sans réglage par thermostat.

5. Procédé selon l'une quelconque des revendications 3 ou 4,
caractérisé par
l'utilisation d'une pompe refoulante à prise automatique équipée d'une vanne à trois voies, d'un manomètre et d'un organe d'arrêt, au lieu du compresseur d'air.

6. Procédé selon la revendication 1,
caractérisé par
l'utilisation d'oxide de zinc au lieu du phosphate d'aluminium, aux mêmes quantités.
